# EUROPÄISCHE PATENTANMELDUNG

(11) **EP 1 000 654 A2**
(43) Veröffentlichungstag der Anmeldung: **17.05.2000**
(21) Anmeldenummer: 99811022.5
(22) Anmeldetag: 08.11.1999
(51) Int. Cl.: B01D 63/08, B01D 61/50

(54) **Plattenförmiger Spacer zur Verwendung in Membrantrennverfahren**

(30) Priorität: 12.11.1998 CH 227698
(71) Anmelder: Zürcher Hochschule Winterthur, 8401 Winterthur (CH)
(72) Erfinder: Winzeler, Heinz Beat, 8405 Winterthur (CH); Furrer, Stefan, 8422 Pfungen (CH)
(74) Vertreter: Patentanwälte Breiter + Wiedmer AG

(57) **Zusammenfassung**

Ein plattenförmiger Spacer (10) zur Verwendung in Membrantrennverfahren weist beidseitig Auflageflächen für Membranen auf. Zur Anströmung der Membranen mit einem zu trennenden Medium ist im Spacer wenigstens ein die beiden Membranauflageflächen miteinander verbindender linienförmiger Durchbruch (16) vorgesehen, der bei aufgelegten Membranen zu einem zweiseitig von Membranen begrenzten rohrförmigen, geschlossenen Strömungskanal führt.

## Beschreibung

Die Erfindung betrifft einen plattenförmigen Spacer zur Verwendung in Membrantrennverfahren, mit beidseitigen Auflageflächen für Membranen, wobei zur Anströmung der Membranen mit einem zu trennenden Medium im Spacer wenigstens eine sich von einem Einlass zu einem Auslass erstreckende linienförmige Ausnehmung mit zumindest teilweise gekrümmtem Verlauf vorgesehen ist und die linienförmige Ausnehmung bei aufgelegter Membran einen rohrförmigen, geschlossenen Strömungskanal bildet.

Die bei Membrantrennverfahren eingesetzten Spacer dienen als Abstandshalter und gleichzeitig zur Strömungsführung. Spacer bekannter Bauart bestehen beispielsweise aus einem Gewebe oder sie werden durch Extrusion hergestellt. Gewebte Spacer zeichnen sich durch einen punktförmigen Kontakt und extrudierte Spacer durch einen linienförmigen Kontakt mit der Membranoberfläche aus. Beide Spacerarten bewirken eine verhältnismässig geringe Trennleistung bezogen auf die angeströmte Membranoberfläche. Zudem sind die Strömungsdruckverluste in aller Regel hoch.

Ein Spacer der eingangs genannten Art ist in der EP-B 0422137 offenbart. Der Strömungskanal ist als spiralförmige Nut in der Membranauflagefläche des Spacers angeordnet. Zur Erhöhung der Trennleistung weist der Spacer zwei Membranauflageflächen auf, wobei jede der Auflageflächen mit einer spiralförmigen Nut ausgestattet ist und die beiden Nuten über Bohrungen miteinander verbunden sind. Bei diesem Spacertyp ergibt sich aufgrund des gekrümmten Strömungskanals durch Bildung von Dean-Wirbeln eine Stabilisierung einer laminaren Strömung. Unter diesen hydrodynamischen Bedingungen werden Stofftransport-Widerstände abgebaut und Ablagerungen auf Membranoberflächen verhindert.

Der Erfindung liegt die Aufgabe zugrunde, einen Spacer der eingangs genannten Art zu schaffen, der konstruktiv einfach ist und zu einer hohen Trennleistung in Membrantrennverfahren beiträgt.

Zur erfindungsgemässen Lösung der Aufgabe führt, dass die linienförmige Ausnehmung als die beiden Membranauflageflächen miteinander verbindender linienförmiger Durchbruch ausgebildet und der rohrförmige, geschlossene Strömungskanal bei aufgelegten Membranen zweiseitig von Membranen begrenzt ist.

Der linienförmige Durchbruch ist somit ein zweiseitig offener, zumindest teilweise gekrümmter Strömungskanal, der bei aufgelegten Membranen zum rohrförmigen, geschlossenen Strömungskanal führt.

Mit der erfindungsgemässen Anordnung eines zweiseitig von Membranen begrenzten Strömungskanals ergibt sich neben einer einfachen Herstellung der wesentliche Vorteil, dass sich die nicht von einer Membran begrenzte Fläche des Strömungskanals verringert, was zu einer Verminderung des durch die Kanalwände verursachten Strömungswiderstandes führt. Die im gekrümmten Kanal gebildeten Dean-Wirbel werden zweiseitig genutzt.

Bevorzugt ist der linienförmige Durchbruch mäanderartig angelegt und kann beispielsweise aus im wesentlichen parallel angeordneten, im wesentlichen geraden Teilbereichen und aus die Strömungsrichtung umlenkenden Krümmungsbereichen gebildet sein. Bei einer bevorzugten Variante sind auch die zwischen den die Strömungsrichtung umlenkenden Krümmungsbereichen angeordneten Teilbereiche ebenfalls gekrümmt. Durch die Biegung dieser Teilbereiche wird erreicht, dass die in den die Strömungsrichtung umlenkenden Krümmungsbereichen sich ausbildenden, die laminare Strömung stabilisierenden Wirbel nicht abbrechen.

Die mäanderartige Anordnung des Strömungskanals hat neben der einfachen Herstellung den Vorteil, dass Einlass- und Auslassöffnungen im Bereich des Spacerrandes angeordnet werden können, was auch die konstruktive Ausgestaltung von Apparaturen erleichtert.

Der linienförmige Durchbruch kann auch spiralförmig angelegt sein. Bei einer weiteren Ausführungsform ist der linienförmige Durchbruch wellenförmig angelegt und es sind mehrere parallel geführte Durchbrüche angeordnet.

Zur Erzielung eines optimalen Strömungsverhaltens bildet der linienförmige Durchbruch bei angelegten Membranen einen Strömungskanal mit einem im wesentlichen rechteckigen, bevorzugt quadratischen Querschnitt.

Der linienförmige Durchbruch kann durch Kanalwände verbindende Stützstege, die die Strömung nur minimal behindern, stabilisiert sein. Die Stützstege können sich bei der Montage von Trennmodulen als nützlich erweisen. Grundsätzlich kann jedoch auf Stützstege verzichtet werden, da die Kanalwände durch die Membranauflagen klemmend fixiert sind.

Der Anwendungsbereich des erfindungsgemässen plattenförmigen Spacers erstreckt sich auf alle Membrantrennverfahren, insbesondere Membrantrennverfahren zur Elektrodialyse, Pervaporation, Mikro- und Ultrafiltration.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Draufsicht auf eine erste Ausführungsform eines Spacers;
- Fig. 2 eine Schrägsicht auf einen entlang der Linie I-I von Fig. 1 geschnittenen Spacer;
- Fig. 3 eine Draufsicht auf eine zweite Ausführungsform eines Spacers;
- Fig. 4 die Explosionszeichnung eines Elektrodialyse-Moduls.

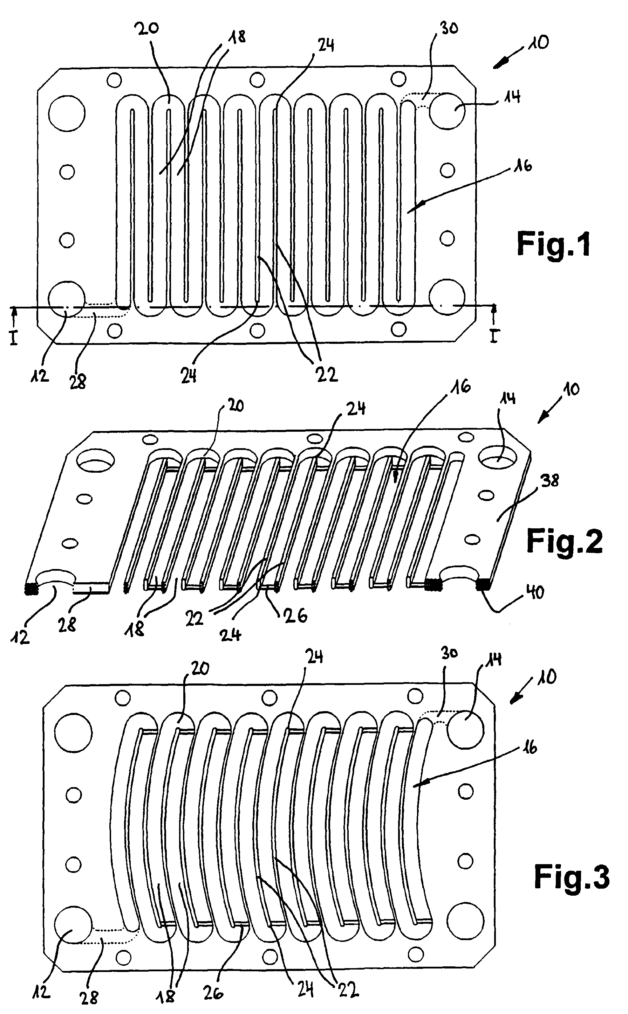

Ein in den Fig. 1 und 2 dargestellter plattenförmiger Spacer 10 von rechteckförmiger Gestalt weist in einer der Ecken eine senkrecht zur Plattenebene angeordnete Zulaufbohrung 12 und eine diametral entgegengesetzt angeordnete Ablaufbohrung 14 auf. Zwischen Zulaufbohrung 12 und Ablaufbohrung 14 ist ein mäanderartig ausgebildeter Durchbruch 16 angeordnet. Der Durchbruch 16 besteht aus parallelen, geraden Teilbereichen 18, die über endständige Krümmungsbereiche 20 miteinander verbunden sind.

Der durch den mäanderartig angelegten Durchbruch 16 gebildete Strömungskanal weist Kanalwände 22 mit jeweils einem freien Ende 24 auf. Zur Stabilisierung dieser Struktur beim Zusammenbau eines Trennmoduls sind die Kanalwände 22 untereinander über Stützstege 26 verbunden.

Die Zulaufbohrung 12 ist mit einem Ende des mäanderartigen Durchbruchs 16 über einen überdeckten Zulaufkanal 28 verbunden. In gleicher Weise besteht eine Verbindung zwischen der Ablaufbohrung 14 und dem zweiten Ende des mäanderartigen Durchbruchs 16 über einen ebenfalls überdeckten Ablaufkanal 30.

Die beiden Plattenoberflächen des Spacers 10 bilden Auflageflächen 38, 40 für in der Zeichnung nicht dargestellte Membranen. Bei bestimmungsgemässer Verwendung des Spacers 10 ist der Durchbruch 16 durch die aufliegenden Membranen abgedeckt und führt zu einem rechteckförmigen, geschlossenen Strömungskanal. Die Verbindung zwischen Spacer 10 und aufliegenden Membranen wird fluiddicht ausgestaltet. Dies wird in der Praxis beispielsweise durch eine Verklebung oder durch umlaufende Dichtstege oder -nuten erzielt.

Bei der in Fig. 3 gezeigten Variante eines Spacers 10 sind die Teilbereiche 18 zwischen den die Strömung umlenkenden Krümmungsbereichen 20 ebenfalls gekrümmt.

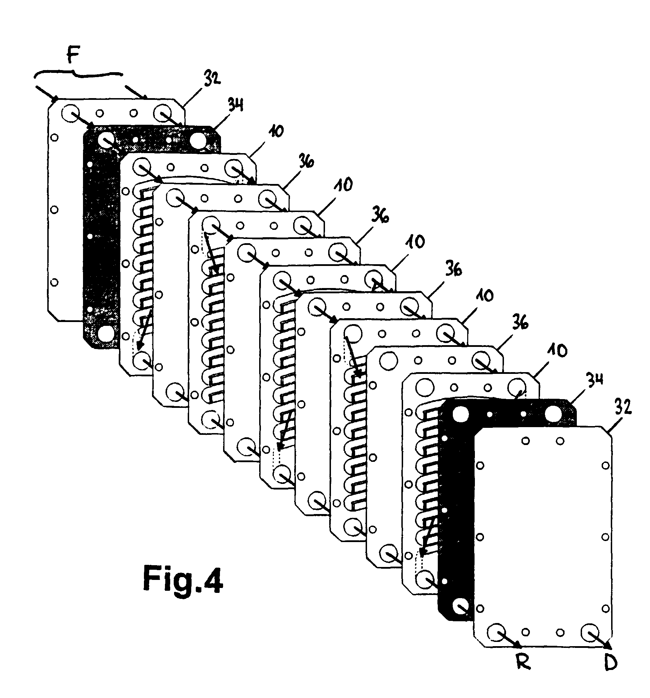

Fig. 4 zeigt den Einsatz der Spacer 10 von Fig. 3 in einem Elektrodialyse-Modul. Zwischen zwei Endplatten 32 und an diese anschliessende Elektrodenplatten 34 sind in abwechselnder Reihenfolge Spacer 10 und Trägerplatten 36 mit dem Filtermedium bzw. das Filtermedium selbst angeordnet. Der Strömungsverlauf durch das Elektrodialyse-Modul ist durch Pfeile dargestellt. Das zu dialysierende Medium F (Feed) tritt auf der einen Seite des Moduls ein und auf der andern Seite des Moduls nach dem Trennvorgang als Retentat R bzw. Diluat D aus.

## Patentansprüche

1. Plattenförmiger Spacer zur Verwendung in Membrantrennverfahren, mit beidseitigen Auflageflächen (38,40) für Membranen, wobei zur Anströmung der Membranen mit einem zu trennenden Medium im Spacer (10) wenigstens eine sich von einem Einlass (28) zu einem Auslass (30) erstreckende linienförmige Ausnehmung mit zumindest teilweise gekrümmtem Verlauf vorgesehen ist und die linienförmige Ausnehmung bei aufgelegter Membran einen rohrförmigen, geschlossenen Strömungskanal bildet,
dadurch gekennzeichnet, dass
die linienförmige Ausnehmung als die beiden Membranauflageflächen 38,40) miteinander verbindender linienförmiger Durchbruch (16) ausgebildet und der rohrförmige geschlossene Kanal bei aufgelegten Membranen zweiseitig von Membranen begrenzt ist.

2. Plattenförmiger Spacer nach Anspruch 1, dadurch gekennzeichnet, dass der linienförmige Durchbruch (16) mäanderartig angelegt ist.

3. Plattenförmiger Spacer nach Anspruch 2, dadurch gekennzeichnet, dass der linienförmige Durchbruch (16) aus im wesentlichen parallel angeordneten, im wesentlichen geraden Teilbereichen (18) und aus die Strömungsrichtung umlenkenden Krümmungsbereichen (20) gebildet ist.

4. Plattenförmiger Spacer nach Anspruch 2, dadurch gekennzeichnet, dass der linienfömiige Durchbruch (16) aus im wesentlichen parallel angeordneten, gekrümmten Teilbereichen (18) und aus die Strömungsrichtung umlenkenden Krümmungsbereichen (20) gebildet ist.

5. Plattenförmiger Spacer nach Anspruch 1, dadurch gekennzeichnet, dass der linienförmige Durchbruch (16) spiralförmig angelegt ist.

6. Plattenförmiger Spacer nach Anspruch 1, dadurch gekennzeichnet, dass der linienförmige Durchbruch (16) wellenförmig angelegt ist und mehrere parallel geführte Durchbrüche angeordnet sind.

7. Plattenförmiger Spacer nach einem der Ansprüche 1 bis 6, dadurch gekennzeichnet, dass der linienförmige Durchbruch bei angelegten Membranen einen Strömungskanal mit einem im wesentlichen rechteckigen, vorzugsweise quadratischen Querschnitt bildet.

8. Plattenförmiger Spacer nach einem der Ansprüche 1 bis 7, dadurch gekennzeichnet, dass der linienförmige Durchbruch (16) durch Kanalwände (22) verbindende Stützstege (26) stabilisiert ist.

9. Verwendung des Spacers (10) nach einem der Ansprüche 1 bis 8 in Membrantrennverfahren zur Elektrodialyse, Pervaporation, Mikro- und Ultrafiltration.
